Europäisches Patentamt

European Patent Office

Office européen des brevets

(11) Publication number: **0 091 879**
**B1**

(12) **EUROPEAN PATENT SPECIFICATION**

(45) Date of publication of patent specification: **27.05.87**

(21) Application number: **83630055.8**

(22) Date of filing: **05.04.83**

(51) Int. Cl.⁴: **B 60 C 9/00,** D 02 G 3/48, B 60 C 9/11, B 60 C 9/18

(54) **Woven wire fabric and tire made thereof.**

(30) Priority: **12.04.82 US 367195**

(43) Date of publication of application:
**19.10.83 Bulletin 83/42**

(45) Publication of the grant of the patent:
**27.05.87 Bulletin 87/22**

(84) Designated Contracting States:
**DE FR GB IT LU**

(56) References cited:
**FR-A-2 214 000**
**FR-A-2 238 783**
**FR-A-2 263 898**
**US-A-3 395 744**
**US-A-3 677 318**
**US-A-3 863 683**
**US-A-4 024 895**

(73) Proprietor: **THE GOODYEAR TIRE & RUBBER COMPANY**
**1144 East Market Street**
**Akron, Ohio 44316-0001 (US)**

(72) Inventor: **Reuter, René François**
**2 um Kettenhouscht**
**L-9142 Buerden (LU)**

(74) Representative: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

**0 091 879**

**Description**

This invention relates to a woven fabric comprising a plurality of weft filaments, said weft filaments comprising an unstretched monofilament polymer selected from the group consisting of polyamide 6,6, polyamide 6, and polyethyleneterephthalate, with said monofilament polymer having an elongation of 400 to 500 percent at its tensile breaking strength; said woven fabric comprising a plurality of warp cords, each warp cord being oriented substantially parallel to, and equidistant from, adjacent warp cords, said warp cords being transverse to, and interwoven with said weft filaments, and said weft filaments having a tensile breaking strength of 100 to 180 N · mm$^{-2}$. US—A—3 395 744, for example, describes such a woven fabric.

The use of metallic warp cords consisting of metallic wire or cables, such as steel wire coated with bronze or brass, as reinforcing elements in tire reinforcement components, such as tread-reinforcing belts and carcass-reinforcing plies, is known in the tire manufacturing technology.

For purposes of describing and claiming the present invention, "warp cords" shall mean cords, wires, or cables that are substantially parallel to, and equidistant from adjacent cords, wires, or cables, and that are intended to act as reinforcing elements when incorporated into a tire or similar article. In addition to warp cords, woven fabrics also have weft filaments, sometimes referred to as "pick cords". For purposes of describing and claiming the present invention, "weft filaments" shall mean cords or monofilaments that are oriented transverse to warp cords to hold the warp cords in a predetermined relationship to each other, parallel to and equidistant from adjacent warp cords, while not being intended to act as reinforcing elements in a tire or similar article.

For purposes of describing and claiming the present invention, "woven wire fabric" shall mean a fabric comprised of metallic warp cords and non-metallic weft filaments, formed by weaving. "Weaving" as used herein means the interlacing of warp cords and weft filaments.

Tire reinforcement components consist of reinforcing elements, hereafter referred to as warp cords, embedded in an elastomeric substance such as natural or synthetic rubber. The warp cords may be embedded in the elastomeric substance by means of a calendering process. The calendering process for metallic warp cords may consist of arranging the desired number of metallic warp cords, that are pulled from a creel, into a predetermined orientation and then compressing an elastomeric substance around and between the adjacent warp cords to form a continuous sheet, with the process generally being referred to in the tire manufacturing technology as "creel calendering". However, if the metallic warp cords have been interwoven with weft filaments, the woven fabric is merely pulled from a roll of fabric that has been placed on a let-off device through a calender, which compresses an elastomeric substance around and between the adjacent warp cords and weft filaments, and is wound up onto another roll on a take-up device. The "creel calendered" or "woven wire" fabric is then cut to predetermined dimensions to form reinforcing components for tires or similar articles.

It is well known in the tire manufacturing technology that it is necessary to expand an unvulcanized tire from a barrel-like shape, in which the tire components are assembled together, to the familiar toroidal shape either as a step of the tire assembly process, or as a step in the vulcanization process. During the expansion of the unvulcanized tire, the angular relationship of the warp cords, with respect to the mid-circumferential plane of the tire, is altered as a result of pantographing. As used herein, "the mid-circumferential plane of a tire" is a plane which is perpendicular to the tire's axis of rotation and located midway between the sidewalls of the tires. As a general rule, the spatial relationships of the warp cords of creel-calendered fabric are more susceptble to distortion as a result of the expansion of the unvulcanized tire than the warp cords of woven fabric, because the weft cords of the woven wire fabric should function to maintain the warp cords in a predetermined relationship parallel to and equidistant from adjacent warp cords. However, to date, fabric woven with metallic warp cords and non-metallic weft filaments has generally not been satisfactory in tire manufacturing because the predetermined orientation of the warp cords relative to each other was not maintained by the weft filaments in use until now. Until now, the weft filaments in use tended to either break, because they had too low a tensile breaking strength, or be too restrictive, because they had too low of elongation characteristics and too high a tensile breaking strength. The problem of maintaining the desired spatial relationship between adjacent metallic warp cords is especially troublesome when the metallic warp cords are used as reinforcing elements in the carcass plies of radial ply tires. As used herein, a "radial ply tire, is a tire having the reinforcing elements of its carcass ply oriented at an angle of between about 90° and about 75° relative to the mid-circumferential plane of the tire.

Warp cords that are not substantially parallel to and equidistant from adjacent warp cords, when they are serving as reinforcing elements in the carcass plies or tread reinforcing components of radial ply tires, may affect the operating characteristics of the tire. The present invention relates to woven fabric having metallic warp cords and non-metallic weft filaments that are monofilament polymers having very high elongation characteristics at their tensile breaking strength, such that the non-metallic weft filaments tend to maintain the metallic warp cords in a predetermined relationship throughout the tire manufacturing process. There is provided in accordance with the invention a woven fabric of the kind set forth, which is characterized in that said warp cords are metallic warp cords and said weft filaments have a diameter in the range of 0.23 to 0.26 mm.

2

To acquaint persons skilled in the tire technologies more fully with the present invention, preferred embodiments of the invention are described below with reference to the drawings in which:

Fig. 1 is a radial cross-sectional view of a radial ply tire manufactured of woven wire fabric made in accordance with the invention;

Fig. 2 is a plan view of woven wire fabric made in accordance with the invention;

Fig. 3 is a cross-sectional view of the woven wire fabric of Fig. 2, after it has been embedded in a sheet of an elastomeric substance;

Fig. 4 is a cutaway view of a portion of the sidewall of a radial ply tire manufactured with woven fabric made in accordance with the present invention; and

Fig. 5 is a cutaway view of a portion of the sidewall of a radial ply tire manufactured using fabric other than that made in accordance with the present invention.

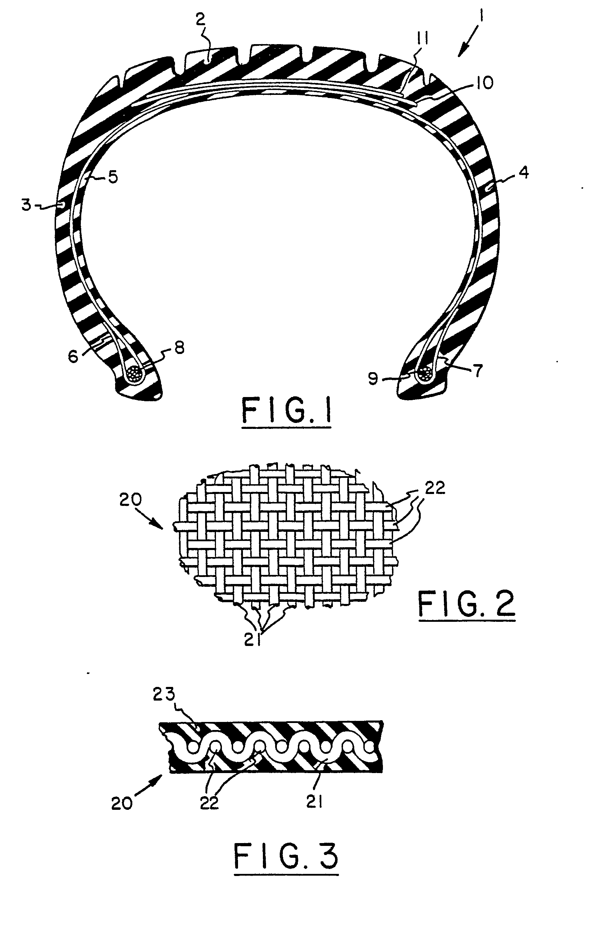

Fig. 1 shows a radial cross-sectional view of a radial ply tire 1 manufactured using fabric made in accordance with the invention. Tire 1 comprises a carcass reinforcing ply 5, the ends 6, 7 of which are anchored around substantially inextensible bead cores 8, 9. A tread portion 2 extends circumferentially about the carcass ply 5, and has sidewalls 3, 4 extending radially inward from the axial edges of the tread toward the beads. As used herein, "axial" and "axially" refer to the axis of rotation of a tire, and "radial" and "radially" refer to planes in which the axis of rotation lies. The tire 1 also comprises a plurality of tread reinforcing components 10, 11, sometimes referred to as "tread plies" or "belt plies", interposed circumferentially between the carcass ply 5 and the tread 2. Woven wire fabric, that is, woven fabric having metallic warp cords, made in accordance with the present invention, may be used to provide the reinforcing elements in the carcass ply 5, or the tread reinforcing elements 10, 11, or both. Woven wire fabric made in accordance with this invention may be used in any reinforcing components of a radial ply tire, bias ply tire, or similar article that may require metallic reinforcing elements. As used herein, a "bias ply tire" is a tire in which the reinforcing elements of the carcass ply form an angle of less than 75° relative to the mid-circumferential plane of the tire.

Fig. 2 is a plan view of woven fabric 20 made in accordance with the present invention. The warp cords 21 are metallic, and may consist for instance of steel wire or cables. Non-metallic weft filaments 22 are interwoven transverse to the metallic warp cords 21 to maintain the metallic warp cords in a predetermined orientation, substantially parallel to and equidistant from adjacent warp cords, during the tire manufacturing process. As used herein, the tire manufacturing process shall include the weaving of the fabric, the calendering of the fabric, the cutting of the fabric to form various tire components, as well as the assembly and vulcanization of the tire itself. Methods of weaving metallic warp cords with non-metallic weft filaments are known to persons skilled in the tire manufacturing technology, being described for example in US—A—3,828,827, issued to J. L. Witt et al.

Fig. 3 is a cross-sectional view of the woven wire fabric 20 of Fig. 2, after the woven wire fabric has been embedded in an elastomeric substance 23, such as natural or synthetic rubber by a process such as calendering, as described above. The elastomeric substance 23 is interposed between and around the metallic warp cords 21 and the non-metallic weft filaments 22 such that a continuous sheet is produced. The continuous sheet may be cut to form various reinforcing components of predetermined configurations.

It is well known in the tire manufacturing and design technologies that during the expansion of an unvulcanized tire from the barrel-like form that the tire has when the carcass ply 5 and the beads 7, 8 are first assembled to the familiar toroidal-like configuration significant forces are employed that place stresses upon the warp cords in both the radial and circumferential directions. These forces tend to distort the desired orientation of the warp cords with respect to adjacent warp cords. While woven wire fabric manufactured in accordance with the present invention may be used in either radial ply tires or bias ply tires, the expansion forces can be especially damaging when the warp cords of the carcass ply are oriented radially as shown in Fig. 1 because radial ply tires may be subjected to expansion forces and stresses twice; once during the assembly of the tire components and again during the tire vulcanization process. The warp cords of the tread reinforcing plies 10, 11 are also subjected to expansion forces and stresses during the tire manufacturing process. The metallic warp cords in creel-calendered reinforcing components can be maintained in their spatial relationships to adjacent warp cords only by the strength of elastomeric material around and between the warp cords. However, the metallic warp cords of woven wire fabric may be maintained in their spatial relationships with respect to adjacent warp cords by the non-metallic weft filaments during the period when the tire is subjected to expansion forces and stresses.

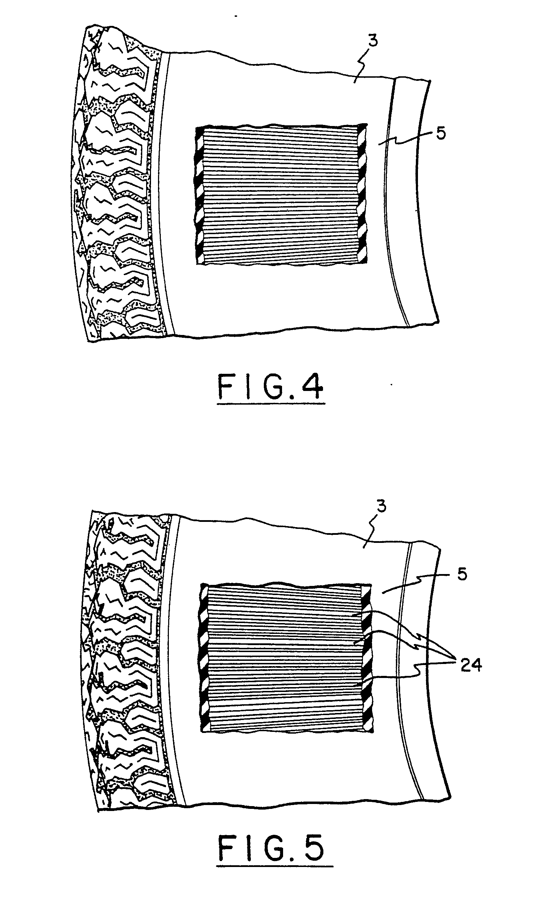

Fig. 4 is a cutaway view of a section of a sidewall 3 of the tire 1 shown in Fig. 1. The metallic warp cords of the carcass reinforcing ply 5 are shown in the preferred configuration that they assume when acting as the carcass reinforcing elements in a vulcanized radial ply tire, when the carcass reinforcing ply consists of a woven fabric made in accordance with the present invention. It will be noted that each metallic warp cord is equidistant from and parallel to adjacent warp cords. The configuration of the warp cords as shown in Fig. 4 is desirable because it imparts good handling and wear characteristics to the vulcanized tire.

Fig. 5 is a cutaway view of a section of a sidewall 3 of a tire manufactured using metallic warp cords in the carcass reinforcing ply 5 when the carcass reinforcing ply 5 consists of either creel-calendered fabric or woven tire fabric having non-metallic weft filaments of materials other than those employed when manufacturing woven fabric in accordance with the present invention. The materials used as non-metallic weft filaments in woven wire fabric heretofore have included polyester, polypropylene, nylon that has been drawn or stretched, and other monofilament and multi-filament materials which tended to either break or be overly restrictive when the metallic warp cords acting as reinforcing elements in a tire were subjected to expansive forces and stresses during the tire manufacturing process. Distortions 24 in the orientation of the metallic warp cords with respect to adjacent warp cords may result from a total lack of restriction to expansion, such as occurs when the non-metallic weft filaments break too easily, or from over-restriction such as occurs when the non-metallic weft filaments have low elongation properties and attempt to prevent the tire from expanding into a toroidal configuration.

It is normally a step in the production of mono-filaments such as nylon, also referred to herein as a "polyamide", to draw or stretch the monofilaments by placing sufficient tension on the monofilament to reorient the long polymeric molecules from a random arrangement to an orderly one in the direction of the monofilament's axis. The drawing or stretching process imparts strength to the filaments, which is an important physical property in most applications. However, the present invention requires that the long polymeric molecules remain disoriented in order to provide a very high elasticity as the weft filaments are stretched during the expansion of the unvulcanized tire. A comparison of the physical properties of undrawn monofilament nylon, such as that used in the present invention, versus regular drawn nylon is made in the following table:

| | Stretched monofilament nylon | Unstretched monofilament nylon | | | | |
|---|---|---|---|---|---|---|
| Diameter (mm) | 0.23 | 0.23 | 0.23 | 0.26 | 0.30 | 0.50 |
| Breaking load (N) | 28.25 | 28.25 | 4.80 | 6.10 | 9.20 | 22.30 |
| Elongation at tensile break (%) | 23 | 23 | 450 | 450 | 450 | 450 |
| Elastic modulus ($N \cdot mm^{-2}$) | 3650 | 3650 | 1010 | 1010 | 1050 | 1365 |
| Elastic limit (N @ % elongation) | 21N @ 14% | 21N @ 14% | 1.25N @ 3% | 1.60N @ 3% | 2.30N @ 3% | 5.35N @ 2% |
| Moisture content (%) | 3.5 | 3.5 | 3.5 | 3.5 | 3.5 | 3.5 |

0 091 879

The unstretched nylon, while having a lower tensile breaking strength, has a much higher percentage of elongation at the tensile breaking strength. It is this high elongation, in conjunction with the comparatively low elastic modulus, which allows the weft monofilaments used in this invention to maintain the desired orientation of the metallic warp cords with respect to each other during the manufacturing of tires or similar articles. As can be seen in the above chart, the diameter of the weft monofilaments is a very important consideration for obtaining the desired physical properties of the woven wire fabric for any particular application. For instance, woven wire fabric made in accordance with the present invention that is intended to be used in the carcass reinforcing ply of a radial truck tire should have a weft monofilament of a diameter in the range of 0.23 mm to 0.26 mm.

Woven wire fabric manufactured in accordance with this invention has metallic warp cords interlaced, as illustrated in Figs. 2 and 3, with weft monofilaments of polyamide 6,6; polyamide 6 or polyethyleneterephthalate, which have not been drawn or stretched during their manufacture. Such monofilaments have an elastic modulus of between 1000 to 2000 N · mm$^{-2}$. All physical properties of the monofilaments described herein refer to monofilaments that have been conditioned at 65 percent relative humidity and a temperature of 24°C. Monofilaments used in the manufacturing of woven fabric according to the present invention should have breaking tensile strengths in the range of 100 to 180 N · mm$^{-2}$, or in other words about 4.80 N for a 0.23 mm diameter monofilament cord of unstretched nylon. The elongation of the monofilament when subjected to a tensile force equal to its tensile breaking strength should be in the range of 400 to 500 percent, and in any case higher than 100 percent. The diameter of the monofilament used in manufacturing woven wire fabric according to the present invention should be in the range of 0.23 mm to 0.26 mm, dependent upon the particular metallic warp cord being used and the design parameters of the tire which the warp cords will be used to reinforce. The monofilament selected for use as a weft filament in the manufacturing of woven fabric in accordance with the present invention should have a diameter that is between 50 percent and 70 percent of its initial diameter when the non-metallic weft filament is elongated to be 200 percent of its initial length.

## Claims

1. A woven fabric (20) comprising:
a plurality of weft filaments (22), said weft filaments comprising an unstretched monofilament polymer selected from the group consisting of polyamide 6,6; polyamide 6; and polyethyleneterephthalate, with said monofilament polymer having an elongation of 400 to 500 percent at its tensile breaking strength; said woven fabric comprising a plurality of warp cords (21), each warp cord being oriented substantially parallel to, and equidistant from, adjacent warp cords, said warp cords being transverse to, and interwoven with said weft filaments, said weft filaments having a tensile breaking strength of 100 to 180 N · mm$^{-2}$, characterized in that said warp cords are metallic warp cords (21) and said weft filaments (22) have a diameter in the range of 0.23 to 0.26 mm.

2. A woven fabric (10) as described in claim 1 further characterized by said weft filaments (22) having an elastic modulus of between 1000 and 2000 N · mm$^{-2}$.

3. A radial ply tire (1) reinforced by a carcass ply (5) comprising woven wire fabric as described in claim 1 or claim 2, characterized in that the weft filaments (22) are not broken.

## Patentansprüche

1. Gewebe (20) mit einer Vielzahl von Schußfäden (22), wobei die Schußfäden ein ungerecktes Monofilament-Polymeres ausgewählt aus der Gruppe enthaltend Polyamid 6,6, Polyamid 6 und Polyethylenterephthalat aufweisen und wobei das Monofilament-Polymere eine Dehnung von 400 bis 500% bei seiner Bruchzugfestigkeit aufweist, mit einer Vielzahl von Kettfäden (21), die im wesentlichen parallel und im gleichen Abstand zueinander angeordnet sind, wobei die Kettfäden quer zu und mit den Schußfäden verwebt sind, und wobei die Schußfäden eine Bruchzugfestigkeit von 100 bis 180 N · mm$^{-2}$ aufweisen, dadurch gekennzeichnet, daß die Kettfäden metallische Kettfäden (21) sind und daß die Schußfäden (22) einen Durchmesser im Bereich von 0,23 bis 0,26 mm aufweisen.

2. Gewebe (10) nach Anspruch 1, dadurch gekennzeichnet, daß die Schußfäden (22) ein Elastizitätsmodul von 1000 bis 2000 N · mm$^{-2}$ aufweisen.

3. Gürtelreifen, verstärkt durch eine Karkasse (5) bestehend aus Drahtgewebe nach Anspruch 1 oder 2, dadurch gekennzeichnet, daß die Schußfäden (22) nicht gebrochen sind.

## Revendications

1. Tissu tissé (20) comprenant:
plusieurs filaments de trame (22) comprenant un monofilament non étiré constitué d'un polymère choisi parmi le groupe comprenant le polyamide 6,6, le polyamide 6 et le téréphtalate de polyéthylène, ce monofilament polymère ayant un allongement de 400 à 500% lors de l'essai de résistance à la rupture par traction, le tissu tissé comprenant plusieurs câblés de chaîne (21) qui sont orientés chacun pratiquement parallèlement à et équidistants de câblés de chaîne adjacents, ces câblés de chaîne s'étendant transversalement à et étant entrelacés avec les filaments de trame, lesquels ont une résistance à la rupture par traction de 100 à 180 N · mm$^{-2}$, caractérisé en ce que les câblés de chaîne sont des câblés métalliques (21), tandis que les filaments de trame (22) ont un diamètre se situant dans l'intervalle de 0,23 à 0,26 mm.

2. Tissu tissé (10) selon la revendication 1, caractérisé en ce que les filaments de trame (22) ont un module élastique compris entre 1.000 et 2.000 N · mm$^{-2}$.

3. Bandage pneumatique à carcasse radiale (1) renforcé par une nappe de carcasse (5) comprenant un tissu métallique tissé tel que décrit dans la revendication 1 ou 2, caractérisé en ce que les filaments de trame (22) ne présentent aucune rupture.

FIG.1

FIG.2

FIG.3

## FIG.4

## FIG.5